# EUROPEAN PATENT APPLICATION

(11) **EP 1 968 266 A1**
(43) Date of publication of application: **10.09.2008**
(21) Application number: 08004406.8
(22) Date of filing: 10.03.2008
(51) Int. Cl.: H04L 12/58, H04L 29/06

(54) **Device, system, and method of electronic communication utilizing audiovisual clips**

(30) Priority: 09.03.2007 US 905847 P
(71) Applicant: My Hollywood Ltd., 91487 Jerusalem (IL)
(72) Inventor: Edry, Illi, Tel Aviv 67314 (IL)
(74) Representative: Maggs, Michael Norman

(57) **Abstract**

Device, system, and method of electronic communication utilizing audiovisual clips. For example, a method of electronic communication utilizing audiovisual clips includes: receiving an identifier of a remotely-stored audiovisual clip through an electronic communication channel associated with an electronic messaging application; and automatically playing the remotely-stored audiovisual clip inside the electronic messaging application.

## Description

### PRIOR APPLICATION DATA

This application claims priority and benefit from United States Provisional Patent Application Number 60/905,847, titled "Audiovisual Expressions", filed on March 9, 2007, which is hereby incorporated by reference in its entirety.

### FIELD

Some embodiments are related to the field of electronic communication systems.

### BACKGROUND

Some electronic communication systems allow users to interact using electronic mail (email). However, some users do not access their email accounts continuously or frequently, and as a result, some users may not experience real-time interaction by exchanging emails.

Some electronic communication systems allow users to interact by "chatting", for example, using an Instant Messaging (IM) application or an online chat-room. Although some chat systems allow rapid exchange of textual messages between users, chat conversation is still inferior to live face-to-face conversation. For example, it may be difficult for a user to convey feelings in a textual chat conversation, whereas a person's body language or facial expressions may easily convey his feelings in a face-to-face conversation.

In some chat systems, some pre-defined strings of characters may be used to represent feelings of the writer; for example, the string ":-)" may correspond to "smiling", "laughing", or "happy". Similarly, some pre-defined acronyms may be used to represent feelings of the writer; for example, the acronym "LOL" corresponds to "Laughing Out Loud" and to laughter and joy. In some chat systems, once the user types a pre-defined string (for example, the string ":-)" or other suitable strings), the chat application automatically replaces the string with a static or animated graphical symbol (for example, a smiling face) or "emoticon".

As Instant Messaging (IM) and other types of electronic messaging become increasingly popular, users are in search of ways to improve and augment the electronic conversation. Particularly, users are in search of ways for efficiently and accurately conveying emotions and reactions that can be easily conveyed in a face-to-face conversation, but cannot be efficiently conveyed through textual chat conversation.

### SUMMARY

Some embodiments include, for example, devices, systems, and methods of electronic communication utilizing audiovisual clips.

In some embodiments, for example, a method of electronic communication utilizing audiovisual clips includes: receiving an identifier of a remotely-stored audiovisual clip through an electronic communication channel associated with an electronic messaging application; and automatically playing the remotely-stored audiovisual clip inside the electronic messaging application.

In some embodiments, the playing includes: automatically playing the audiovisual clip independent of substantially any input of a user of the electronic messaging application.

In some embodiments, the displaying includes: displaying the audiovisual clip substantially at a position intended for displaying received electronic messaging text.

In some embodiments, the method includes: upon termination of the playing of the audiovisual clip, displaying in said position a thumbnail representing the audiovisual clip.

In some embodiments, the method includes: upon termination of the playing of the audiovisual clip, replacing the audiovisual clip with a hyperlink to a Web-page capable of replaying the audiovisual clip.

In some embodiments, the method includes: displaying in the electronic messaging application, in proximity to said position, a textual representation corresponding to a content of the audiovisual clip.

In some embodiments, the playing includes: playing a streamed version of the remotely-stored audiovisual clip.

In some embodiments, the method includes: substantially continuously monitoring incoming electronic messaging traffic to detect the identifier of the remotely-stored audiovisual clip.

In some embodiments, the method includes: substantially continuously monitoring electronic messaging traffic; and based on a contextual analysis of electronic messaging traffic, displaying a recommendation to send one or more audiovisual clips.

In some embodiments, a system for electronic communication utilizing audiovisual clips includes: a server associated with a first device, wherein the first device includes an electronic messaging application able to create an electronic messaging conversation channel with a second device, wherein the server includes: a clip repository to store a plurality of audiovisual clips; and a streamer module to receive from the first device an identifier of an audiovisual clip selected by a user of the first device through an interface associated with said electronic messaging application, to send the identifier to the second device, an to automatically stream the selected audiovisual clip to the second device.

In some embodiments, the server includes: a search module to search the clip repository for one or more audiovisual clips based on a search query received from the first device.

In some embodiments, the audiovisual clips are associated with textual tags, and the search module is to search for a match between the search query and one or more textual tags.

In some embodiments, the server includes: an advertising module to select an advertisement from an advertisement repository based on a title of said audiovisual clip, and to serve the advertisement to the first device.

In some embodiments, the server includes: an advertising module to select an advertisement from an advertisement repository based on a title of said audiovisual clip, and to serve the advertisement to the second device.

In some embodiments, the server includes: a usage tracking module to track a plurality of sending operations of said audiovisual clip by the first device, and to send to the first device an alert of over-usage of said audiovisual clip.

In some embodiments, the server includes: a usage tracking module to track sending operations by the first device, to determine a topic common to a plurality of audiovisual clips sent by the first device, and to send to the first device a recommendation to send another audiovisual clip associated with said topic.

In some embodiments, the usage tracking module is to determine that another audiovisual clip is an appropriate response to the audiovisual clip streamed to the second device, and to send to the second device a recommendation to send the other audiovisual clip to the first user.

In some embodiments, the server includes: a usage tracking module to monitor electronic messaging traffic, and, based on a contextual analysis of electronic messaging traffic, to send to the first device a recommendation to send one or more audiovisual clips.

Some embodiments may include, for example, a computer program product including a computer-useable medium including a computer-readable program, wherein the computer-readable program when executed on a computer causes the computer to perform methods in accordance with some embodiments of the invention.

Some embodiments may provide other and/or additional benefits and/or advantages.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.

Figure 1 is a schematic block diagram illustration of an interface of an Instant Messaging (IM) application, in accordance with some demonstrative embodiments of the invention.

Figure 2 is a schematic block diagram illustration of website for supporting communication of audiovisual clips, in accordance with some demonstrative embodiments of the invention.

Figure 3 is a schematic block diagram illustration of an editor of audiovisual clips in accordance with some demonstrative embodiments of the invention.

Figure 4 is a schematic block diagram illustration of an interface attached to an Instant Messaging (IM) application, in accordance with some demonstrative embodiments of the invention.

Figure 5 is a schematic block diagram illustration of a system in accordance with some demonstrative embodiments of the invention.

### DETAILED DESCRIPTION

In the following detailed description, numerous specific details are set forth in order to provide a thorough understanding of some embodiments of the invention. However, it will be understood by persons of ordinary skill in the art that some embodiments may be practiced without these specific details. In other instances, well-known methods, procedures, components, units and/or circuits have not been described in detail so as not to obscure the discussion.

The terms "plurality" or "a plurality" as used herein include, for example, "multiple" or "two or more". For example, "a plurality of items" includes two or more items.

Although portions of the discussion herein relate, for demonstrative purposes, to wired links and/or wired communications, some embodiments are not limited in this regard, and may include one or more wired or wireless links, may utilize one or more components of wireless communication, may utilize one or more methods or protocols of wireless communication, or the like. Some embodiments may utilize wired communication and/or wireless communication.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device (e.g., a device incorporating functionalities of multiple types of devices, for example, PDA functionality and cellular phone functionality), a vehicular device, a non-vehicular device, a mobile or portable device, a non-mobile or non-portable device, a wireless communication station, a wireless communication device, a wireless Access Point (AP), a wireless Base Station (BS), a Mobile Subscriber Station (MSS), a wired or wireless Network Interface Card (NIC), a wired or wireless router, a wired or wireless modem, a wired or wireless network, a Local Area Network (LAN), a Wireless LAN (WLAN), a Metropolitan Area Network (MAN), a Wireless MAN (WMAN), a Wide Area Network (WAN), a Wireless WAN (WWAN), a Personal Area Network (PAN), a Wireless PAN (WPAN), devices and/or networks operating in accordance with existing IEEE 802.11, 802.11 a, 802.11 b, 802.11 g, 802.11 n, 802.16, 802.16d, 802.16e, 802.16m standards and/or future versions and/or derivatives of the above standards, units and/or devices which are part of the above networks, one way and/or two-way radio communication systems, cellular radio-telephone communication systems, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or tag or transponder, a device which utilizes Near-Field Communication (NFC), a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, a "smartphone" device, a wired or wireless handheld device (e.g., BlackBerry (RTM), Palm (RTM) Treo (TM)), a Wireless Application Protocol (WAP) device, or the like.

Some embodiments may be used in conjunction with one or more types of wireless communication signals and/or systems, for example, Radio Frequency (RF), Infra Red (IR), Frequency-Division Multiplexing (FDM), Orthogonal FDM (OFDM), OFDM Access (OFDMA), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, Multi-Carrier Modulation (MDM), Discrete Multi-Tone (DMT), Bluetooth (RTM), Global Positioning System (GPS), IEEE 802.11 ("Wi-Fi"), IEEE 802.16 ("Wi-Max"), ZigBee (TM), Ultra-Wideband (UWB), Global System for Mobile communication (GSM), 2G, 2.5G, 3G, Third Generation Partnership Project (3GPP), 3GPP Long Term Evolution (LTE), 3.5G, or the like. Some embodiments may be used in conjunction with various other devices, systems and/or networks.

The terms "wireless device", "wireless computing device", "mobile device" or "mobile computing device" as used herein include, for example, a device capable of wireless communication, a communication device or communication station capable of wireless communication, a desktop computer capable of wireless communication, a mobile phone, a cellular phone, a laptop or notebook computer capable of wireless communication, a PDA capable of wireless communication, a handheld device capable of wireless communication, a portable or non-portable device capable of wireless communication, or the like.

The terms "web" or "Web" as used herein includes, for example, the World Wide Web; a global communication system of interlinked and/or hypertext documents, files, web-sites and/or web-pages accessible through the Internet or through a global communication network; including text, images, videos, multimedia components, hyperlinks, or other content.

The term "user" as used herein includes, for example, a person or entity that owns a computing device or a wireless device; a person or entity that operates or utilizes a computing device or a wireless device; or a person or entity that is otherwise associated with a computing device or a wireless device.

The term "friend" as used herein includes, for example, another user; a family member; a relative; an acquaintance; a colleague; a co-worker; a person that the user knows from personal, professional or other backgrounds; a person that the user knows from real-world interaction or meeting; and/or a person that the user knows from virtual interaction and/or virtual meeting (e.g., email exchange, instant messaging, online chat, or the like).

At an overview, some embodiments include devices, systems, and methods of electronic communication using audio/video clips.

Some embodiments include devices, systems, and methods for self-expression using digital audiovisual clips or segments ("snacks" or "toks"). For example, a digital audiovisual clip includes one or more segments of audiovisual materials, cinematographic artworks, movies, television programs, news editions, sport events, commercials, cartoons, or the like. A digital audiovisual clip includes either audio in conjunction with video, only audio, or only video.

In some embodiments, a digital audiovisual clip is communicated via electronic messaging, Instant Messaging (IM), or electronic chat. In other embodiments, a digital audiovisual clip is served or streamed using a medium, for example, a website or a presentation.

Some embodiments include methods for commercializing a digital audiovisual clip. Profits may be gained in a number of ways or a combination thereof, for example: by attributing a digital audiovisual clip to a copyrighted audiovisual material in order to determine a payee of copyright royalties; by coupling a digital audiovisual clip with technological copyright protection, e.g., Digital Rights Management (DRM); by collecting a fee from a user (a sender and/or a receiver) of a digital audiovisual clip; by motivating users to use audiovisual clips, e.g., by rewarding them for contribution of content; by selling and/or promoting goods and services in connection with a communicated digital audiovisual clip; and/or by selling advertising space in connection with a digital audiovisual clip.

The terms "audiovisual clip", "digital audiovisual clip", "audiovisual segment", "digital audiovisual segment", "tok", or "snack", as used herein, include, for example, an audio file, a video file, and audio/video file, an image file, a photograph file, a graphical file, an animation, an animated image, an audio-enhanced image, one or more short segments of audio associated with an image or with a set of images, or the likes.

In some embodiments, audiovisual clips are exchanged, sent, received, played and/or used as means for expressing thoughts, ideas, moods and/or emotions, for conveying messages efficiently or easily, and optionally for making an impact or a particular effect on the receiver (e.g., to induce laughter, joy, shock, or the like). Some embodiments thus provide a new way of expressing thoughts, ideas, moods, emotions and the like (hereinafter jointly referred to as "emotions") and/or conveying messages, in a substantially digital and/or electronic environment. The new way of expressing emotions and/or conveying messages may be referred to as a new "audiovisual language", wherein different types of audiovisual materials are optionally mapped and/or attributed to verbs, adjectives and/or nouns.

In some embodiments, one or more emotions are expressed by presenting a "snack", namely, a short digital audiovisual clip substantially capable of reflecting emotions and/or conveying a message. A snack may be an excerpt from an audiovisual material, optionally containing audio in conjunction with video, or only audio, or only video. For simplicity of description, these three content types will be hereinafter jointly referred to as "audiovisual".

By way of example, a snack may be an excerpt from a published audiovisual material, such as a film or cinematographic artwork. An example of what may be referred to as a snack is the scene from the 1951 film "Alice in Wonderland", showing the White Rabbit comically screaming: "Don't just do something, stand there!". This snack may express and substantially convey a message of a call for action, a request for help, or the like.

Another example of what may be referred to as a snack is the famous scene from the 1939 film "Gone with the Wind", showing actor Clark Gable saying to actress Vivien Leigh: "Frankly, my dear, I don't give a damn." This snack may express and substantially convey a message of indifference, lack of interest, lack of concern, or the like.

Although the two examples given above relate to a snack possibly lasting only a few seconds, the length of a snack is not limited to a specific duration. Snacks may express emotions and/or convey messages of different lengths and/or complexities, and therefore their playable length may vary substantially.

In some embodiments, a snack may be an excerpt from an audiovisual material, e.g., a movie. There are many types of audiovisual materials which may be suitable, in part or as a whole, for serving as a snack. Some examples are cinematographic artworks (commonly referred to as "films" or "movies"), television programs, news editions, sport events, commercials, cartoons and the like. In addition, audio-only materials (such as songs and melodies) and/or video-only materials (such as silent films) may be suitable, in part or as a whole, for serving as a snack. Optionally, a snack may include only the video or only the audio of an audiovisual material that originally contained video in conjunction with audio. Optionally, a snack may include audio and/or video that did not appear in the original form of an audiovisual material. Optionally, removal and/or alteration of audio and/or video may be used while editing and composing snacks.

In some embodiments, snacks, as interpersonal communication means similar to speech or writing, need to be transferred from one or more persons (hereinafter a "sender" or "senders") to one or more persons (hereinafter a "recipient" or "recipients"). For example, a user may respond to a question or a comment by sending back a snack which essentially expresses his response. Furthermore, in some embodiments, a user is supplied with tools to find and transfer an appropriate snack, and optionally to edit a snack and/or to edit audiovisual materials that originate from the user.

In some embodiments, snacks may be addressed to a non-specific recipient or recipients. For example, similar to posting a letter on a billboard, to be read by any number of non-specific persons, a snack may be posted on a website, to be viewed by any number of non-specific persons.

In some embodiments, one or more snacks are communicated via an electronic message. For example, a snack may be communicated using an email message, a message sent over an Instant Messaging ("IM") system, an online chat or chat-room, a mobile phone, an electronic greeting card ("e-card") and/or other methods of electronic messaging.

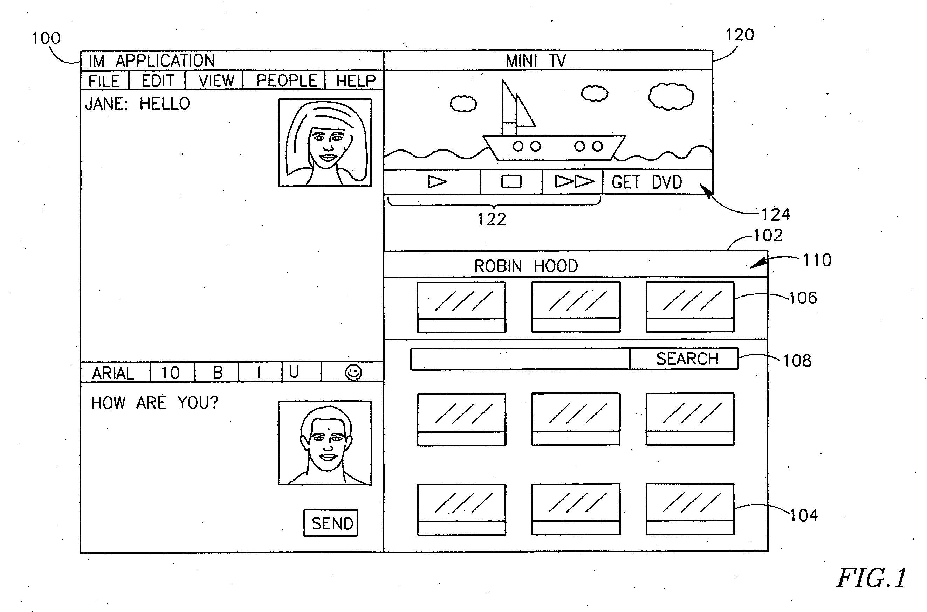

Figure 1 schematically illustrates an interface of an Instant Messaging (IM) application in accordance with some demonstrative embodiments of the invention. Although the communication of snacks is demonstrated herein, for simplicity and clarity of discussion, using an IM application, communication of snacks may be performed via other means of electronic messaging, such as an email, an e-card, a mobile phone, a SMS message, a MMS message, an online chat-room, or the like.

In an embodiment, an IM application or a chat window 100 thereof is coupled with one or more interfaces (hereinafter "widgets") for communicating snacks. Optionally, a widget, such as snack widget 102, is used for communicating snacks. Snack widget 102 optionally includes thumbnails of snacks, such as thumbnail "wawawiwa" 104 and thumbnail "Yeah Baby!" 106. Thumbnails may include a still picture taken from a snack, a video segment taken from a snack, a text describing the snack, or another visual and/or audible representation of a snack. Snack widget 102 optionally includes a search box 108 which may be used for locating snacks and/or searching in various databases. Other suitable methods or components may be used to search, locate and/or select snacks, for example, utilizing pre-defined lists, drop-down menus, hierarchical categorization, classes and sub-classes, keywords, tags, or the like. Snack widget 102 optionally includes an advertising space 110, which may be used for conveying advertisements to a user.

Optionally, a widget, such as miniTV 120, is used for communicating snacks. MiniTV 120 optionally continuously plays one or more snacks, either in a random order or in a pre-defined order. Controls, such as controls 122, may be used by a user to control the playing of snacks, the order of playing, the sound level, or the like. MiniTV 120 optionally includes an advertising space 124, which may be used for conveying advertisements to a user. Optionally, advertising space 124 includes an advertisement related (e.g., contextually) to a snack currently playing.

A snack shown on miniTV 120 may be communicated by a user to one or more recipients. Communication of snack from miniTV 120 may be performed, for example, by dragging it into chat window 100, or by pressing or selecting an "add" or "send" button in the snack widget 102. The snack may then be watched by either the recipient(s) alone, or essentially simultaneously by the sender and the recipient(s). Watching a snack essentially together, sender and recipient(s), may enrich their conversation and may provide a new, interesting subject to discuss.

In some embodiments, widgets and/or functions described herein may be integrated into an IM or coupled to it externally, as a separate application, as a plug-in or extension, or the like. In some embodiments, an automated intelligent agent analyzes a conversation (such as a conversation taking place in chat window 100) in substantially real time, and provides the user with recommendation of snacks related to the contents of the conversation or related to words and phrases that are exchanged in the chat conversation. Furthermore, in some embodiments, pre-defined text and/or symbols typed by a user during a chat conversation may automatically trigger sending a snack to other parties of the conversation, or the mutual watching of a miniTV 120 snack.

In some embodiments, one or more snacks may be used as a ring tone of a mobile phone or cellular phone. For example, when an incoming call occurs, a snack is played on the mobile' phone, either in a video-only mode, audio-only mode, or both audio an video. The identity of a snack or a plurality of snacks playing on an incoming call may be determined or selected either by the call initiator, by the call receiver, or automatically. Automatic snack determination or selection may include a randomization process or a method intelligently personalizing the snack to be used.

In some embodiments, a snack is presented or otherwise coupled to a website. By way of example, a snack may be presented on a personal website or a web-log ("blog") of a user, for a purpose such as expressing the user's mood, style, entertainment preferences and the like. In some embodiments, a snack may be presented on any type of website, such as a corporate website, a news website, an online message board, an online billboard, and the like.

In some embodiments, a snack is presented or otherwise coupled to a presentation. For example, a snack may be presented in a Microsoft PowerPoint presentation. Similarly, a snack may be presented in other types of computerized presentations. Optionally, a snack may be presented not in connection with a computerized presentation, but rather using a media player or a standalone player coupled to the snack or otherwise intended, configured or adapted for playing snacks.

In some embodiments, a website is used to support the communication of snacks and other activities related to snacks. A website may facilitate functions such as searching for snacks, communicating snacks, editing snacks, chatting, communicating with other website users, and various other functions.

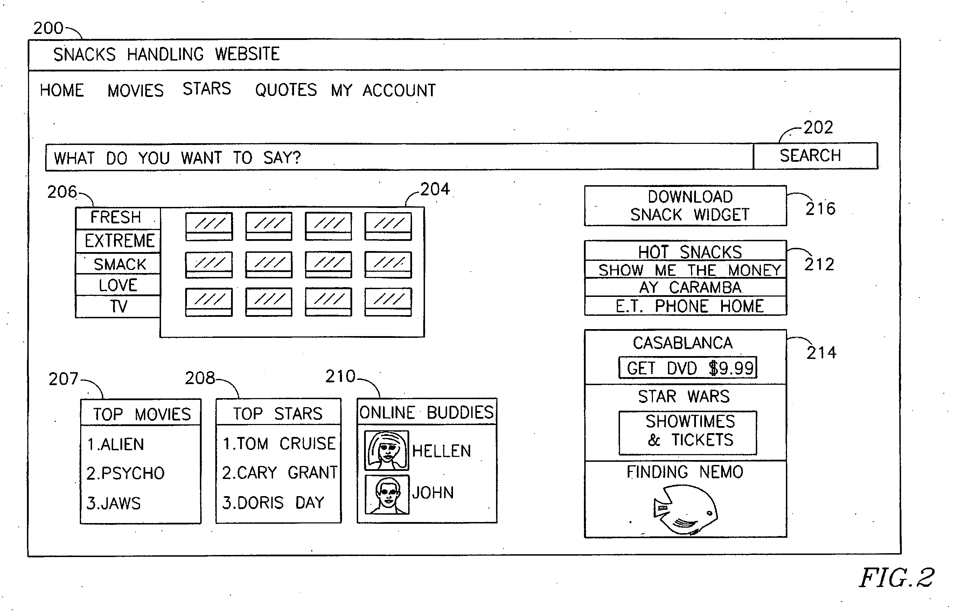

Figure 2 schematically illustrates a block diagram of a website 200 for supporting communication of audiovisual clips or snacks, in accordance with some demonstrative embodiments of the invention. Website 200 may include, for example, a search box 202, a snack array 204, buttons 206, and/or other suitable components.

Search box 202 may be used for locating snacks. Optionally, a user may enter into the search box a message that he would like to convey, and a system (e.g., a server computer coupled to a database) finds a snack essentially capable of conveying that message or a snack reflecting that message. Furthermore, the system is optionally capable of aggregating and/or combining a plurality of snacks, to compose and convey a message that is relatively long or complex. Optionally, aggregation and/combination of snacks is performed even for messages that may be conveyed using fewer snacks or one snack.

The snack array 204 shows thumbnails of snacks. Thumbnails may include a still picture taken from a snack, a video segment taken from a snack, a text describing the snack, a textual quotation from the snack, or another visual and/or audible representation of a snack. A demonstrative snack array 204 shows three snack thumbnails horizontally and four snack thumbnails vertically; other options of visually organizing thumbnails may be used.

Buttons 206 may be used for switching between sets of thumbnails shown in snack array 204. Buttons 206 may provide access to sets of snacks categorized in many ways. For example, categorization may be done based on the type of emotion that snacks are expressing, the source of the snacks (television, films, song clips, or the like), the popularity of the snacks among users, actors, movie titles, or the like.

In some embodiments, website 200 may include one or more sections for presenting items determined to be popular among multiple or many users. For example, a component "Top Movies" 207 may list names of snacks or movies most searched, communicated or otherwise accessed by users. As another example, a component "Top Stars" 208 may list names of stars (actors, actresses, animated characters, or the like) most searched, communicated or otherwise accessed by users. Similarly, a component "Hot Snacks" 212 list snacks that are popular among multiple or many users.

Website 200 may optionally include a component or display (an "online section") of identifiers (e.g., nicknames, names, email addresses, IM usemames, or the like) of website users currently connected to the website ("online"). For example, a component "Online Buddies" 210 shows names, identifiers and/or pictures of online users. Optionally, an online section may show online users using a picture, a video, or any other visual or audiovisual representation. An online section may show online users based on their social connection with a user to whom the online section is presented, based on alphabetical order, based on chronological or reverse-chronological order of accessing the website 200, or based on other criteria, sort criteria, grouping criteria, or filtering criteria.

Website 200 may optionally include one or more advertising spaces, for example, an advertising space 214, which may be used for conveying advertisements to a user, e.g., in connection with a particular snack.

Website 200 may optionally include one or more links for downloading software (e.g., proprietary software) for usage in connection with snacks. For example, a button 216 represents a hyperlink for download of a proprietary IM software application incorporating the use of snacks and miniTV. Other software products for communicating, editing, sharing, playing and otherwise treating or handling snacks may be offered for download.

Website 200 may be coupled through a web-server to a database of snacks. Snacks may be indexed, categorized or otherwise arranged by tagging, taxonomy and/or other methods. Tagging and/or taxonomy of snacks may be performed in one or more ways. For example, users may add and/or remove tags and/or taxonomic classification in connection with a snack (optionally subject to a particular or general permission to do so). Similarly, administrators of website 200 may add and/or remove tags and/or taxonomic classification in connection with a snack. Optionally, addition and/or removal of tags and/or taxonomic classification may be done automatically using an intelligent engine able to analyze and/or understand the contents and/or the attributes of a snack. Tagging and/or taxonomy of snacks may be performed using a combination of multiple methods.

In some embodiments, website 200 may be personalized to accommodate a particular user, showing him buttons, links, snacks and other options customized based on his choices and/or based on his preferences as reflected in his previous activity in connection with website 200.

In some embodiments, website 200 may provide various ways of communicating and/or serving a snack. Optionally, a user may be presented with options of sending a snack to one or more recipients using electronic messaging. For example, a snack may be communicated by email, IM, mobile phone, e-card and the like.

In some embodiments, a snack may optionally be downloaded, extracted and/or drawn from website 200 into a presentation, another website, a blog, a mobile phone, or the like. Website 200 may support integration with many presentation formats, website formats, and mobile phone formats, for allowing the user to effortlessly use snacks in his application or device of choice. Optionally, a user may download a snack to his local computer in many audio and video computer formats and encodings.

In some embodiments, snacks may be syndicated to third-party websites. A third-party website may optionally display a representation of one or more snacks, as a link, as a thumbnail, as a playing video in a small window, or as any combination of the above. Thumbnails and/or links may include a still picture taken from a snack, a video segment taken from a snack or another visual and/or audible and/or textual representation of a snack. Snack representation may be derived from website 200 and/or from a snacks database, using one or more syndication technologies, for example, Really Simple Syndication (RSS) or Atom.

In some embodiments, a user may upload one or more snacks into website 200 and/or into a snacks database. In some embodiments, a user may upload audiovisual material and use the system to transform it into one or more snacks. An uploaded audiovisual material and/or snack may be communicated to other users, displayed on website 200, and/or used in connection with other functions of website 200 described herein. In some embodiments, a user may optionally apply functions, such as communicating a snack and/or editing a snack, to an audiovisual material and/or to a snack stored on his local computer and/or on a remote location.

In some embodiments, website 200 and one or more of the features and options described herein may optionally be customized to mediums and devices such as mobile phones, portable media players, handheld computers and the like. Some embodiments may include or may utilize a suitable hardware system coupled with software, for playing, editing, communicating and/or otherwise using or handling snacks.

In some embodiments, snacks and/or audiovisual materials may be edited, composed and/or otherwise handled, for example, using on a website such as website 200 and/or using software located elsewhere.

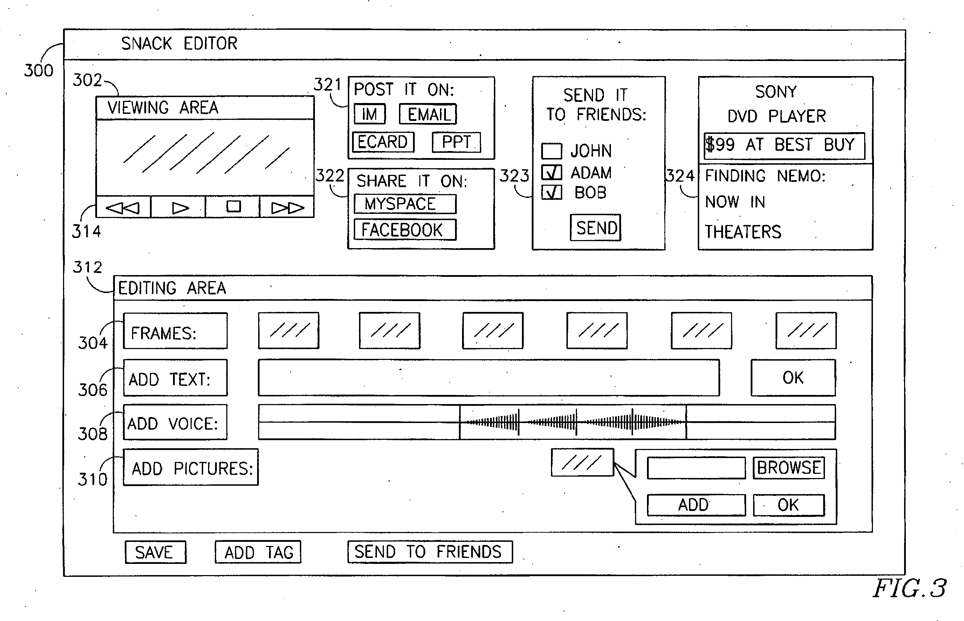

Figure 3 schematically illustrates an editor 300 of audiovisual clips in accordance with some demonstrative embodiments of the invention. Editor 300 includes, for example, a viewing area 302, an editing area 312, and optionally other areas.

Viewing area 302 allows a user to view a snack and/or an audiovisual material as it is being edited. Viewing may be controlled (played, stopped and shifted forward or backward) by controls 314.

Editing area 312 includes various controls used for editing a snack and/or an audiovisual material. For example, a "frames" control 304 may be used for viewing and managing frames of a snack and/or an audiovisual material; an "add text" control 306 may be used for inserting text into a snack and/or an audiovisual material; an "add voice" control 308 may be used for inserting voice or sound segments into a snack and/or an audiovisual material, optionally allowing the user to record his own voice for this purpose; and an "add pictures" control 310 may be used for inserting pictures into a snack and/or an audiovisual material.

Editing area 312 and/or editor 300 may include not only basic editorial tools, and may further include more complex tools that form a non-linear editing system, tools allowing editing of multiple video channels, multiple audio channels and multiple textual/illustrative overlying channels, substantially simultaneously.

In some embodiments, a user may watch a portion, or up to the entirety, of an audiovisual material (for example, in viewing area 302), and may extract one or more segments of it. These segments may be transformed into one or more snacks, and/or may be edited using editor 300. For example, a user may be able to watch the movie "Gone with the Wind", and optionally extract the scene wherein actor Clark Gable says: "Frankly, my dear, I don't give a damn." This extracted scene may serve as a snack, and may be further used by the user and/or by other users.

Some embodiments, optionally, may prevent a user from watching a full-length audiovisual material, or a substantial part of it, and may only allow watching or extraction of limited-time snacks or audiovisual portions. For example, some embodiments may interrupt the continuous play of a movie once every few minutes; the interruption may include, for example, pausing the movie, displaying advertisement, showing a system-generated message, waiting until a pre-defined time period elapses, and the like.

In some embodiments, editor 300 may include other components, for example: a posting component 321 allowing the user to post the snack into an IM message, an email message, an electronic card, a PowerPoint presentation, or the like; a sharing component 322 allowing the user to share of publish the snack (e.g., to a virtual social network); a sending component 323 allowing the user to send the snack to selected friends; and an advertising component 324 able to display to the user one or more advertisements, optionally related to a snack being edited. Other suitable buttons or components may be used, for example, allowing the user to save the edited snack, to tag the snack, to send the snack to substantially all the friends of the user, or the like.

In some embodiments, snacks may be a new format and a new carrier and objective of copyrights, and thus may provide copyright holders with a path for deriving extra profits out of their existing copyrighted materials. For example, a holder of the copyrights for a movie denoted M, may enjoy extra revenues once snacks are extracted from the movie M and offered to the public or used by members of the public. These snacks, which are scenes or excerpts from copyrighted material (the movie M), are likely to also be protected by copyrights under some legal systems. Therefore, M's copyrights holder may be entitled to royalties for usage of these snacks. Once these snacks join the existing M-related line of products and souvenirs, they may potentially provide extra profits without degrading sales of the rest of the M-related products.

In some embodiments, in view of the vast amount of entertainment-related contents being consumed by people (for example, entertainment-related mobile phone ring-tones that are being purchased in large quantities), snacks may also enjoy similar enthusiasm from users.

In some embodiments, snacks derived from audiovisual materials that are in the public domain may also be commercialized. Furthermore, snacks derived from audiovisual materials substantially created by a user or a plurality of users may also be commercialized.

In some embodiments, a method of "fingerprinting" is used to allow copyright holders to further benefit from their copyrights through snacks. Fingerprinting includes attributing a snack or an audiovisual material to a copyrighted audiovisual material. Fingerprinting analyzes the snack or the audiovisual material to determine a unique succession (a "fingerprint") of video and/or audio frames. This fingerprint is compared against a database of previously determined fingerprints of a known copyrighted audiovisual material. When a match is found, and the snack or the audiovisual material is determined to be an excerpt of a copyrighted audiovisual material, the copyrights holder is able to know from whom to collect royalties.

In the context of website 200 of Figure 2 and/or editor 300 of Figure 3, fingerprinting may allow a copyright holder to become aware of a user who is using a copyrighted audiovisual material. The copyright holder may then receive royalties from the user, or optionally receive them from an owner of website 200 and/or editor 300.

In some embodiments, fingerprinting may contribute to compensation of copyright holders for profits that may be lost due to audiovisual materials obtained unlawfully by users.

Some embodiments may utilize technological copyright protection of snacks, such as Digital Rights Management ("DRM"). In some embodiments, snacks are coupled with technological means for copyright protection. The technological means are capable of restricting usage of a snack to limitations set in the snack's license agreement. The technological copyright protection may preserve and protect copyright holders of an audiovisual material from which an excerpt is used as a snack.

Some embodiments may include collecting a fee from snack users. Optionally, a user is charged substantially each time he communicates a snack, edits a snack, playbacks a snack, or otherwise uses a snack. Optionally, a user may purchase a subscription entitling him to usage over a certain amount of time. Optionally, a user may purchase a subscription entitling him to usage of a certain number of snacks, or performance of a certain number of operations on a snack, or a combination of methods.

Some embodiments may be adapted to motivate users to use snacks. In some embodiments, profits are gained by motivating users to view, communicate, edit and/or otherwise use snacks. As the overall usage of snacks rises, more profits may essentially be gained by employing various methods. Optionally, users are motivated to view, communicate, edit and/or otherwise use snacks by receiving payment for performing one or more of these actions. Payment may be monetary and/or may include various other benefits. Optionally, payment to a user is based on the amount of snacks and/or other audiovisual content that the user uploads to a snacks database and/or to website 200 of Figure 2. In some embodiments, payment is optionally calculated as a percentage of profits gained by an owner of a snacks database and/or a website, such as website 200.

Some embodiments may include selling and/or promoting goods and/or services in connection with a snack. In other embodiments, goods and/or services offered or promoted may lack connection to a snack. In some embodiments, users may be exposed to promotion of goods and/or services next to snacks. For example, advertising space 124 of Figure 1 includes a "Get DVD" or "Buy DVD" button, allowing the purchase of a DVD related to a snack shown in miniTV 120. Similarly, users may be presented with options of purchasing tickets to a certain movie while they are watching a snack in connection to that movie, and/or when a thumbnail or other representation of a snack is presented to them otherwise. Users may be presented with options of purchasing other goods and/or services related to a snack. In some embodiments, snacks may serve as a means for gaining profits from products and/or services in virtually any medium, for example, a website (such as website 200 of Figure 2), an IM. application (such as the IM application of Figure 1) or another medium on which snacks are essentially served and/or communicated.

Some embodiments may include selling advertising space in connection with a snack; in other embodiments, advertisements shown may not necessarily have connection to a snack. In some embodiments, users may be exposed to advertisements next to snacks. The advertisements may be served by third-party providers who pay the advertising space owner for the exposure. For example, advertising space 110 of Figure 1 includes an advertisement for a television program named "Robin Hood", optionally allowing the user to initiate a process or a transaction profitable to the advertisement provider, e.g., by clicking on the advertisement. Similarly, users may be exposed to other options supplied by other providers, for example, while they are watching a snack in connection with that provider or with that provider's goods and/or services, and/or when a thumbnail or other representation of a snack is presented to them otherwise. Optionally, advertisements may be user-personalized, such that a user is exposed to advertisements based on a backwards analysis of his entertainment-related preferences.

In some embodiments, advertising space may be sold directly to an advertiser, or to an advertising network which, in turn, sells it according to its policy and guidelines, to one or more third parties, for example, similar to the Google AdSense network which allows owners of advertising space to let Google serve third-party advertisements on their space in return to payment.

In some embodiments, snacks may serve as a means for gaining profits from advertising space in virtually any medium, for example, a website (such as website 200 of Figure 2), an IM application (such as the IM application of Figure 1), or another medium on which snacks are served and communicated.

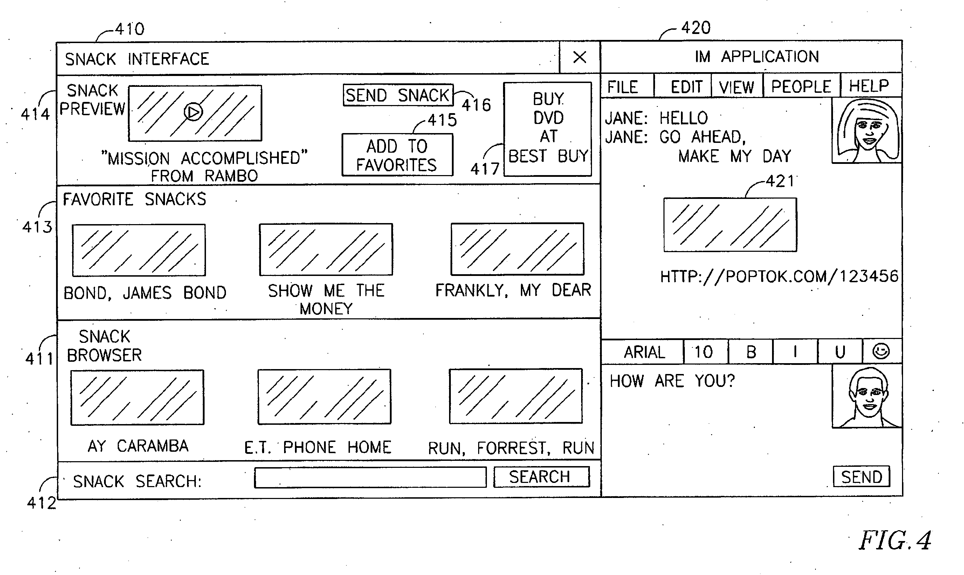

Figure 4 schematically illustrates an interface 410 attached to (or integrated with) an Instant Messaging (IM) application 420 in accordance with some demonstrative embodiments of the invention. A snack browsing section 411 of interface 410 includes textual and/or graphical representations of snacks that are available for the IM user. A snack searching section 412 of interface 410 includes a search component, allowing the IM user to search for one or more snacks based on keywords, tags, free-text search, or the like. A favorite snacks section 413 of interface 410 shows representations of snacks that the IM user selected as his "favorites", using an "add to favorites" button 415.

A snack preview section 414 of interface 410 displays a preview of a snack selected by the IM user, and optionally displays one or more playback controls (e.g., play, stop, pause, forward, rewind, mute). Interface 410 further includes a "send snack" button 416, which allows the IM user to send the snack (namely, the selected snack and/or the previewed snack) through IM communication. Interface 410 optionally includes an advertising section 417 able to display one or more advertisements, optionally related to a selected or previewed snack.

Optionally, interface 410 may include drop-down lists or other browsing components to allow the IM user to efficiently find a snack in accordance with pre-defined search criteria; for example, a button or a drop-down list to show popular snacks, a button or drop-down list to show snacks from Academy Award winning movies, a button or drop-down list to show snacks of common or popular types (e.g., to convey "hello" or "goodbye"), a button or drop-down list to show snacks of common or popular reply snacks ("talkbacks") to a previously-received snack, or the like.

The IM user may select a snack (e.g., after searching snacks and/or browsing snacks, or from his favorite snacks); and the selected snack is automatically previewed and played in the preview section 414. Upon clicking on the "send snack" button 416, the selected snack is sent to another IM user who is currently in IM chat with the user of IM application 420.

The IM application 420 further includes a snack 421 received from another IM user. For example, the other IM user sent a snack which shows a scene from the movie "Dirty Harry" in which the actor says "Go ahead, make my day". The receives snack 421 is automatically implanted and played inside the chat window of the IM application 420 (e.g., and not separately or not in the snack interface 410), for example, based on an algorithm that determines the exact location in the chat window in which an incoming message is to be placed. Optionally, the received snack plays automatically upon receipt. Optionally, a hyperlink is shown in proximity to the receives snack 421, or replaces the receives snack after its playback; the hyperlink points to a web-page in which the receives snack 421 may be replayed. Optionally, speech that is included in the received snack (e.g., "Go ahead, make my day") is also displayed as text, for example, above the received snack 421, or instead of the received snack after its playback. Optionally, the received snack 421 may be replayed inside the IM application 420 for a pre-defined time period (e.g., twenty seconds), and is then removed, or replaced with a replay hyperlink, or with a thumbnail representing the snack 421. In some embodiments, the snack interface 410 is not implemented as an external component to the IM application 420, but rather, the snack interface is implemented as an integrated part or module of the IM application 420; or, the IM application 420 is adapted to include functionalities described herein with reference to the snack interface 410. Other suitable implementations may be used.

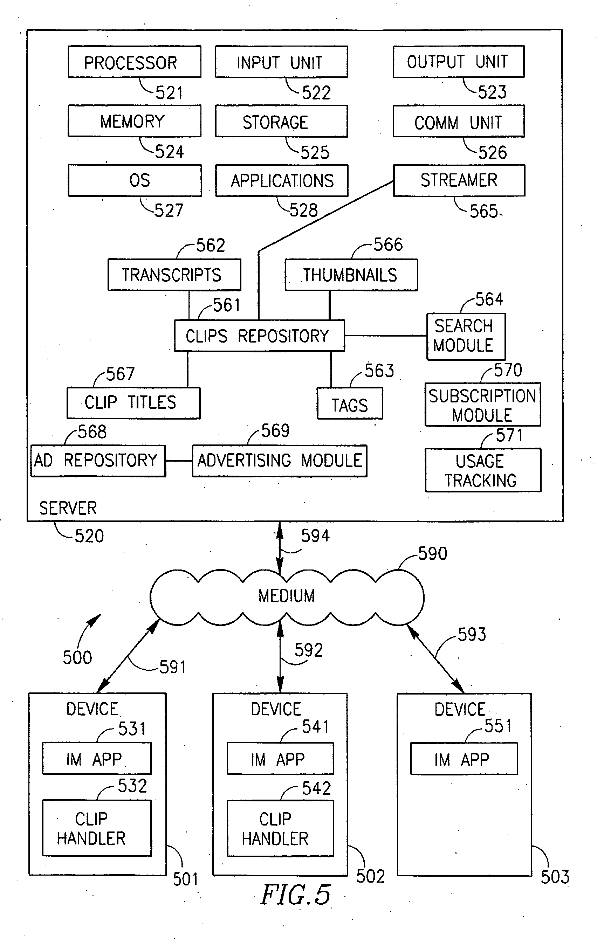

Figure 5 schematically illustrates a block diagram of a system 500 in accordance with some demonstrative embodiments of the invention. System 500 includes multiple computing devices, for example, devices 501-503. Each one of devices 501-503 may include a wired computing device or a wireless computing device, for example, a desktop computer, a laptop computer, a wireless device, a mobile device, a PDA device, a cellular phone, a device capable of Instant Messaging (IM), a device capable of sending and/or receiving email, a device capable of sending and/or receiving multimedia, or the like.

Each one of devices 501-503 is able to access a communication network 590 through wired and/or wireless links 591-593, respectively. Communication network 590 may be or may include, for example, a global communication network, the Internet, the World Wide Web, a wired network, a wireless network, a combination of one or more wired networks and/or one or more wireless networks, a shared access medium, or the like. In some embodiments, communication network 590 may include one or more wired and/or wireless communication networks, for example, an a-synchronic or asynchronous wireless network, a synchronic wireless network, a managed wireless network, a non-managed wireless network, a burstable wireless network, a non-burstable wireless network, a scheduled wireless network, a non-scheduled wireless network, or the like.

A server 520 is able to access the communication network 590 through a wired and/or wireless link 594. In some embodiments, server 520 may be implemented using suitable hardware components and/or software components, for example, a processor 521, an input unit 522, an output unit 523, a memory unit 524, a storage unit 525, and a communication unit 526. Similar components may be included in devices 501, 502 and/or 503.

Processor 521 includes, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or other suitable multi-purpose or specific processor or controller. Processor 521 executes instructions, for example, of an Operating System (OS) 527 or of one or more applications 528.

Input unit 522 includes, for example, a keyboard, a keypad, a mouse, a touch-pad, a touch-screen, a joystick, a track-ball, a stylus, a microphone, or other suitable pointing unit or input device. Output unit 523 includes, for example, a monitor, a screen, a touch-screen, a Cathode Ray Tube (CRT) display unit, a Liquid Crystal Display (LCD) display unit, a plasma display unit, a printer, one or more audio speakers or earphones, or other suitable output devices.

Memory unit 524 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 525 includes, for example, a hard disk drive, a floppy disk drive, a Compact Disk (CD) drive, a CD-ROM drive, a Digital Versatile Disk (DVD) drive, an internal or external database or repository, or other suitable removable or non-removable storage units. Memory unit 524 and/or storage unit 525, for example, store data processed by server 520.

Communication unit 526 includes, for example, a wired or wireless transceiver, a wired or wireless modem, a wired or wireless Network Interface Card (NIC), or other unit suitable for transmitting and/or receiving communication signals, blocks, frames, transmission streams, packets, messages and/or data. Optionally, communication unit 526 includes, or is associated with, one or more antennas or one or more sets of antennas.

In some embodiments, some or all of the components of server 520 are enclosed in a common housing or packaging, and are interconnected or operably associated using one or more wired or wireless links. In other embodiments, components of server 520 are distributed among multiple or separate devices or locations.

Server 520 includes an audiovisual clips repository 561 which stores audiovisual clips. Optionally, each audiovisual clip is associated with a full transcript 562 of the text spoken in the audiovisual clip, stored as well in server 520. Optionally, each audiovisual clip is associated with a still image or thumbnails 566, for example, the first frame of the audiovisual clip, or a representative frame of the audiovisual clip. Optionally, each audiovisual clip is associated with a clip title 567, e.g., represented as text.

Optionally, each audiovisual clip is further associated with one or more tags 563 or keywords that relate to the content of the audiovisual clip, to actors performing in the audiovisual clip, to a movie or program from which the audiovisual clip was extracted, or the like. For example, an audiovisual clip showing the phrase "Show me the money" from the movie "Jerry Maguire" may be associated with the following tags: "money", "show me the money", "sports", "sports agent", "yell", "shout", "Tom Cruise", "Cuba Gooding Jr.", "Renee Zellweger", "Academy Award", and "Oscar".

Server 520 further includes a search module 564 able to search for audiovisual clips based on a query. Server 520 additionally includes a streamer 565 able to stream, serve, broadcast, or make available for downloading a selected audiovisual clip stored in the clips repository 562.

Device 501 includes an IM application 531 and an audiovisual clip handler 532 ("snack widget"). The audiovisual clip handler 532 may be launched automatically upon launching of the IM application 531, and/or may be launched manually by the user of device 501.

Similarly, device 502 includes an IM application 541 and an audiovisual clip handler 542. The audiovisual clip handler 542 may be launched automatically upon launching of the IM application 532, and/or may be launched manually by the user of device 502.

In contrast, device 503 includes an IM application 551, but does not include an audiovisual clip handler.

The user of device 501 engages in an IM conversation with the user of device 502, using their IM applications 531 and 541, respectively. The user of device 501 decides to send to the user of device 502 an audiovisual clip showing the phrase "Show me the money" from the movie "Jerry Maguire". The user of device 501 operates his audiovisual clip handler 532 for this purpose. For example, the user of device 501 utilizes a search component of the audiovisual clip handler 532 to submit a query, e.g., the word "money" or the term "Jerry Maguire". The query is sent from the audiovisual clip handler 532 to the server 520. Based on the query, the search module 564 of server 520 searches the audiovisual clips repository 561, and finds one or more results. For each result, the search module 564 retrieves the respective thumbnail and the respective clip title, and sends the thumbnail and title to the audiovisual clip handler 532. The audiovisual clip handler 532 presents the search results, namely, the set of thumbnails and respective clip titles.

The user of device 501 clicks on one of the search results (namely, on a thumbnail or on a clip title). In response, the audiovisual clip handler 532 sends a signal to the server 520, indicating that the user of device 501 clicked on a particular search result. In response, the streamer 565 of server 520 streams to device 501 the respective audiovisual clip that matches the selected search result. The streamed audiovisual clip is presented in a preview pane of the audiovisual clip handler 532 in device 502.

Optionally, the user of device 501 may repeat the process, for example, by searching for other words or terms, or by selecting other audiovisual clips for preview. Optionally, the audiovisual clip handler 532 allows browsing through multiple audiovisual clips stored in server 520. In some embodiments, the audiovisual clip handler 532 allows sorting or filtering of audiovisual clips based on various parameters, tags, keywords, or the like. Optionally, the user of device 501 may add audiovisual clips to his "favorites" list, and may selectively browse audiovisual clips that were previously added to his "favorites" list.

The user of device 501 decides to send to the user of device 502 a particular audiovisual clip, e.g., after its previewing in the audiovisual clip handler 532. The user of device 501 commands the audiovisual clip handler 532 to send the selected audiovisual clip, e.g., by clicking on a "send clip" button. In response, the audiovisual clip handler 532 sends a signal to server 520, indicating that device 501 commands to send a particular clip to device 502. Server 520 streams the audiovisual clip to the audiovisual clip handler 542 of device 502. The streamed audiovisual clip may be displayed, for example, in a separate window, a pop-up window; in the window of the audiovisual clip handler 542, or in the chat window of the IM application 541 of device 502. In some embodiments, the audiovisual clip handler 542 of device 502 calculates the exact location in the chat window of the IM application 541 in which a subsequent text is to be placed if entered, and overlays the streamed audiovisual clip onto this location. In some embodiments, the audiovisual clip is played within the chat window of the IM application 541, but not necessarily as a separate layer or as an overlay. In some embodiments, the audiovisual clip may similarly be streamed to the sending user, namely, the user of device 501.

Once the streaming of the audiovisual clip to device 502 terminates, optionally, a hyperlink is placed in the display of device 502, for example, in the chat-window of the IM application 541, e.g., in proximity to the audiovisual clip or instead of the audiovisual clip. The hyperlink points to a web-page on which server 520 serves that audiovisual clip for further replay. In some embodiments, instead of the hyperlink or in addition to the hyperlink, a thumbnail representing the audiovisual clip is placed in the display of device 502, for example, in the chat-window of the IM application 541; and a user selection or click on the thumbnail may trigger a local replay (e.g., using streaming) and/or a remote replay (e.g., through a web-page) of the audiovisual clip. Other suitable replacements may be used, and other suitable methods for local and/or remote replay may be used.

In some embodiments, the user of device 501 may be able to send the audiovisual clip to the user of device 503 through IM conversation, although device 503 does not include an audiovisual clip handler. In such case, for example, server 520 may not stream the audiovisual clip into an audiovisual clip handler, and the audiovisual clip handler may not play automatically within the chat window of the IM application 551. Instead, server 520 sends to the IM application 551 only the hyperlink to the web-page on which server 520 serves that audiovisual clip for further replay.

In some embodiments, the audiovisual clip handlers 532 and 542 may communicate using a dedicated channel. In other embodiments, the audiovisual clip handlers 532 and 542 may communicate by "riding" on the IM communication channel that exists between IM applications 531 and 541. For example, the audiovisual clip handlers 532 and 542 may include a pre-defined code in their communications (e.g., "POPTOK", and/or a unique alpha-numeric identifier), which may be intercepted and handled after their transport through the IM communication channel.

In some embodiments, audiovisual clips are streamed from server 520 to other devices. In other embodiments, audiovisual clips are automatically downloaded by such devices from server 520 and then played locally; in some embodiments, local playback may begin during the download, after a short buffering period elapses.

In some embodiments, audiovisual clips are transported among users of devices having IM capabilities. In other embodiments, audiovisual clips are transported among users of other types of devices (e.g., cellular phones, PDA devices, or the like) and/or through other types of conversations (e.g., SMS messages, MMS messages, email messages, or the like).

In some embodiments, some audiovisual clips stored in repository 561 are available for all users, for example, for free; whereas other audiovisual clips ("premium clips") are available only to paying users ("premium users" or "subscribers") who subscribed to premium services using a subscription module 570.

In some embodiments, server 520 includes, or is associated with, an advertisement repository 568 which stores textual, graphical, and/or audiovisual advertisements. For example, server 520 may utilize an advertising module 569 to selectively serve advertisements to devices 501 and/or 502, for example, prior to, in parallel to, or subsequent to playback of an audiovisual clip. In some embodiments, served advertisements may be related to audiovisual clips that were sent and/or received by the device to which the advertisements are served.

In some embodiments, device 501 may monitor and track text as it is being types by the user of device 501 into the IM application 531; may detect or identify words, keywords, terms, tags, or quotes-of interest in the types text; and may automatically suggest to the user of device 501 to send a particular audiovisual clip related to the identified typed text. In other embodiments, the suggested audiovisual clip may be automatically sent in response to such identification of typed text, without requiring a particular user approval for sending. For example, the user may type the phrase "show me the money" in his IM application 531; the audiovisual clip handler 532 may monitor the typing, and may send a query to the remote server 520, which in turn may respond that the typed text corresponds to a particular audiovisual clip in which this phrase appears. Then, the audiovisual clip handler 531 may suggest to the user of device 501 to send this audiovisual clip (e.g., using a pop-up window and/or an optionally preview of the suggested audiovisual clip), or may automatically send the suggested clip without first requesting user approval. In some embodiments, the user of device 501 may configure the audiovisual clip handler 532, to indicate whether or not he is interested in automatic audiovisual clip sending based on tracking of typed IM text. In some embodiments, once an audiovisual clip is suggested to a user, the user may send the suggested audiovisual clip using a pre-defined keyboard shortcut or other suitable interface shortcut or button.

In some embodiments, automatic audiovisual clip recommendation and/or sending may be based not only on text entered or typed by the user of device 501, but also or alternatively on text received by the IM application 531 from the other IM application 532; for example, the audiovisual clip handler 531 may identify that the user of device 501 received the text "Good morning" from the user of device 502; and may automatically suggest to the user of device 501 to send an audiovisual clip that includes the phrase "Good morning, Vietnam" from the movie "Good morning, Vietnam". In some embodiments, the user of device 501 may configure the audiovisual clip handler 532, to indicate whether or not he is interested in automatic audiovisual clip sending based on tracking of received IM text.

In some embodiments, the audiovisual clip handler 531 may include a logic to monitor operations performed by the user and to determine from them user preferences. For example, in some embodiments, the audiovisual clip handler 531 may determine that a significant percentage of the audiovisual clips that the user of device 501 sends, are associated with sports or with sports-related movies; accordingly, the audiovisual clip handler 531 may selectively suggest to the user of device 501 audiovisual clips (e.g., to be sent to other users) that are similarly associated with these topics. In other embodiments, the audiovisual clip handler 531 may determine that a significant percentage of the audiovisual clips that the user of device 501 receives, are associated with romance movies; accordingly, the audiovisual clip handler 531 may selectively suggest to the user of device 501 audiovisual clips (e.g., to be sent to other users) that are similarly associated with this topic.

In other embodiments, the audiovisual clip handler 531 may perform analysis that takes into account topics of sent or received audiovisual clips, as well as identity or name of sending or receiving parties. For example, the audiovisual clip handler 531 may detect that the user of device 501 typically sends (or receives) sports-related audiovisual clips when he engages in IM conversations with another user named "Adam1976"; whereas the user of device 501 typically sends (or receives) romantic audiovisual clips when he engages in IM conversations with another user named "Janet1980". Accordingly, the audiovisual clip handler 531 may selectively suggest to the user of device 501 to send a sports-related audiovisual clip when the user engages in IM conversation with "Adam1976"; and the audiovisual clip handler 531 may selectively suggest to the user of device 501 to send a romantic audiovisual clip when the user engages in IM conversation with "Janet1980".

In some embodiments, the audiovisual clip handler 531 may warn or alert the user of device 501 from over-usage of a particular audiovisual clip. For example, the audiovisual clip handler 531 may detect that the user of device 501 repeatedly sends the audiovisual clip "Good morning, Vietnam" to another user "Adam1976"; and the audiovisual clip handler 531 may suggest to the user of device 501 to send, instead, an audiovisual clip that includes the phrase "Good morning" from the movie "Silence of the Lambs". In some embodiments, the audiovisual clip handler 531 may be configured to alert the user of device 501 from over-usage of a particular audiovisual clip; or from usage of an audiovisual clip that server 520 indicates to be generally over-used by a community of users, e.g., as tracked by a usage tracking module 571 of server 520. In other embodiments, in contrast, the user of device 501 may configure the audiovisual clip handler 531 to particularly suggest to him audiovisual clips that are popular or even "over-used" in a community of users.

Some embodiments may utilize client/server architecture, publisher/subscriber architecture, fully centralized architecture, partially centralized architecture, fully distributed architecture, partially distributed architecture, scalable Peer to Peer (P2P) architecture, or other suitable architectures or combinations thereof.

Discussions herein utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Some embodiments may take the form of an entirely hardware embodiment, an entirely software embodiment, or an embodiment including both hardware and software elements. Some embodiments may be implemented in software, which includes but is not limited to firmware, resident software, microcode, or the like.

Furthermore, some embodiments may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be or may include an electronic, magnetic, optical, electromagnetic, InfraRed (IR), or semiconductor system (or apparatus or device) or a propagation medium. Some demonstrative examples of a computer-readable medium may include a semiconductor or, solid state memory, magnetic tape, a removable computer diskette, a Random Access Memory (RAM), a Read-Only Memory (ROM), a rigid magnetic disk, an optical disk, or the like. Some demonstrative examples of optical disks include Compact Disk - Read-Only Memory (CD-ROM), Compact Disk - Read/Write (CD-R/W), DVD, or the like.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems' or remote printers or storage devices, for example, through intervening private or public networks. In some embodiments, modems, cable modems and Ethernet cards are demonstrative examples of types of network adapters. Other suitable components may be used.

Some embodiments may be implemented by software, by hardware, or by any combination of software and/or hardware as may be suitable for specific applications or in accordance with specific design requirements. Some embodiments may include units and/or sub-units, which may be separate of each other or combined together, in whole or in part, and may be implemented using specific, multi-purpose or general processors or controllers. Some embodiments may include buffers, registers, stacks, storage units and/or memory units, for temporary or long-term storage of data or in order to facilitate the operation of particular implementations.

Some embodiments may be implemented, for example, using a machine-readable medium or article which may store an instruction or a set of instructions that, if executed by a machine, cause the machine to perform a method and/or operations described herein. Such machine may include, for example, any suitable processing platform, computing platform, computing device, processing device, electronic device, electronic system, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit; for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

Functions, operations, components and/or features described herein with reference to one or more embodiments, may be combined with, or may be utilized in combination with, one or more other functions, operations, components and/or features described herein with reference to one or more other embodiments, or vice versa.

While certain features of some embodiments of the invention have been illustrated and described herein, many modifications, substitutions, changes, and equivalents may occur to those skilled in the art. It is, therefore, to be understood that the appended claims are intended to cover all such modifications and changes.

## Claims

1. A method of electronic communication utilizing audiovisual clips, the method comprising: receiving an identifier of a remotely-stored audiovisual clip through an electronic communication channel associated with an electronic messaging application; and automatically playing the remotely-stored audiovisual clip inside the electronic messaging application.

2. The method of claim 1, wherein the playing comprises:
automatically playing the audiovisual clip independent of substantially any input of a user of the electronic messaging application.

3. The method of claim 2, wherein the displaying comprises:
displaying the audiovisual clip substantially at a position intended for displaying received electronic messaging text.

4. The method of claim 3, comprising:
upon termination of the playing of the audiovisual clip, displaying in said position a thumbnail representing the audiovisual clip.

5. The method of claim 3, comprising:
upon termination of the playing of the audiovisual clip, replacing the audiovisual clip with a hyperlink to a Web-page capable of replaying the audiovisual clip.

6. The method of claim 2, comprising:
displaying in the electronic messaging application, in proximity to said position, a textual representation corresponding to a content of the audiovisual clip.

7. The method of claim 1, wherein the playing comprises:
playing a streamed version of the remotely-stored audiovisual clip.

8. The method of claim 1, comprising:
substantially continuously monitoring incoming electronic messaging traffic to detect the identifier of the remotely-stored audiovisual clip.

9. The method of claim 1, comprising:
substantially continuously monitoring electronic messaging traffic; and based on a contextual analysis of electronic messaging traffic, displaying a recommendation to send one or more audiovisual clips.

10. A system for electronic communication utilizing audiovisual clips, the system comprising: a server associated with a first device,
wherein the first device comprises an electronic messaging application able to create an electronic messaging conversation channel with a second device,
wherein the server comprises:
a clip repository to store a plurality of audiovisual clips; and
a streamer module to receive from the first device an identifier of an audiovisual clip selected by a user of the first device through an interface associated with said electronic messaging application, to send the identifier to the second device, an to automatically stream the selected audiovisual clip to the second device.

11. The system of claim 10, wherein the server comprises:
a search module to search the clip repository for one or more audiovisual clips based on a search query received from the first device.

12. The system of claim 11, wherein the audiovisual clips are associated with textual tags, and wherein the search module is to search for a match between the search query and one or more textual tags.

13. The system of claim 12, wherein the server comprises:
an advertising module to select an advertisement from an advertisement repository based on a title of said audiovisual clip, and to serve the advertisement to the first device.

14. The system of claim 12, wherein the server comprises:
an advertising module to select an advertisement from an advertisement repository based on a title of said audiovisual clip, and to serve the advertisement to the second device.

15. The system of claim 12, wherein the server comprises:
a usage tracking module to track a plurality of sending operations of said audiovisual clip by the first device, and to send to the first device an alert of over-usage of said audiovisual clip.

16. The system of claim 12, wherein the server comprises:
a usage tracking module to track sending operations by the first device, to determine a topic common to a plurality of audiovisual clips sent by the first device, and to send to the first device a recommendation to send another audiovisual clip associated with said topic.

17. The system of claim 12, wherein the usage tracking module is to determine that another audiovisual clip is an appropriate response to the audiovisual clip streamed to the second device, and to send to the second device a recommendation to send the other audiovisual clip to the first user.

18. The system of claim 12, wherein the server comprises:
a usage tracking module to monitor electronic messaging traffic, and, based on a contextual analysis of electronic messaging traffic, to send to the first device a recommendation to send one or more audiovisual clips.

19. A computer program product comprising a computer useable medium including a computer readable program, wherein the computer readable program when executed on a computer causes the computer to perform a method comprising:
receiving an identifier of a remotely-stored audiovisual clip, through an electronic communication channel associated with an electronic messaging application; and
automatically playing the remotely-stored audiovisual clip inside the electronic messaging application.

20. The computer program product of claim 19, wherein the method comprises: automatically playing the audiovisual clip independent of substantially any input of a user of the electronic messaging application.
